# EUROPEAN PATENT APPLICATION

(11) **EP 4 683 378 A1**
(43) Date of publication of application: **21.01.2026**
(21) Application number: 25189925.8
(22) Date of filing: 16.07.2025
(51) Int. Cl.: H04W 24/10

(54) **METHOD, DEVICE, APPARATUS AND COMPUTER READABLE STORAGE MEDIUM FOR COMMUNICATION**

(30) Priority: 18.07.2024 CN 202410970190
(71) Applicant: Nokia Solutions and Networks Oy, 02610 Espoo (FI)
(72) Inventor: HUANG, Kai Kai, Shanghai, 201201 (CN)
(74) Representative: DREISS Patentanwälte PartG mbB

(57) **Abstract**

Example embodiments of the present disclosure relate to a device, a method, an apparatus, and a computer-readable storage medium for communication. A method for communication includes obtaining, by a first device from a second device via a first channel, an indication that the second device is to perform a channel measurement for a second channel that is different from the first channel, the first device and the second device being currently operating on a first channel, and at least one communication link existing between the first device and the second device; and performing, based on the indication, at least one of: performing a data transmission to the second device within a duration of the channel measurement via the second channel; or performing a data transmission to the second device after a predetermined time interval via the first channel, or performing a data transmission to the second device with a communication link, in a plurality of communication links between the first device and the second device, that is unused for performing the channel measurement.

## Description

### FIELD

Example embodiments of the present disclosure relate to the field of communications technologies, and more particularly, to a method, a device, an apparatus, and a computer-readable storage medium for communication.

### BACKGROUND

A wireless channel serves as a foundation for system design, network optimization, and performance evaluation. Channel measurement is a direct means for researching the wireless channel in new frequency bands and new scenes. Through channel measurement, massive channel measurement data may be obtained, measurement data may be processed through a high-precision multipath parameter estimation algorithm, channel parameters may be extracted, and channel characteristics may be deeply studied and analyzed.

### SUMMARY

In a first aspect of the present disclosure, a method for communication is provided. The method includes obtaining, by a first device from a second device via a first channel, an indication that the second device is to perform a channel measurement for a second channel that is different from the first channel, the first device and the second device being currently operating on a first channel, and at least one communication link existing between the first device and the second device; and performing, based on the indication, at least one of the following: performing a data transmission to the second device within a duration of the channel measurement via the second channel; or performing a data transmission to the second device after a predetermined time interval via the first channel, or performing a data transmission to the second device with a communication link, in a plurality of communication links between the first device and the second device, that is unused for performing the channel measurement.

In a second aspect of the present disclosure, a method for communication is provided. The method includes transmitting, by a second device to a first device via a first channel, an indication that the second device is to perform a channel measurement for a second channel that is different from the first channel, the first device and the second device being currently operating on a first channel, and at least one communication link existing between the first device and the second device; and receiving, from the first device, a data transmission via one of the first channel, the second channel, or a third channel.

**In** a third aspect of the present disclosure, a device for communication is provided. The device includes at least one processor; and at least one memory coupled with the at least one processor, the at least one memory including instructions stored therein, the at least one memory and the instructions being further configured to, with the at least one processor, cause the device to: obtain, by a first device from a second device via a first channel, an indication that the second device is to perform a channel measurement for a second channel that is different from the first channel, the first device and the second device being currently operating on a first channel, and at least one communication link existing between the first device and the second device; and perform, based on the indication, at least one of the following: perform a data transmission to the second device within a duration of the channel measurement via the second channel; or perform a data transmission to the second device after a predetermined time interval via the first channel, or perform a data transmission to the second device with a communication link, in a plurality of communication links between the first device and the second device, that is unused for performing the channel measurement.

In a fourth aspect of the present disclosure, a device for communication is provided. The device includes at least one processor; and at least one memory coupled with the at least one processor, the at least one memory including instructions stored therein, the at least one memory and the instructions further configured to, with the at least one processor, cause the device to: transmit, by a second device to a first device via a first channel, an indication that the second device is to perform a channel measurement for a second channel that is different from the first channel, the first device and the second device being currently operating on a first channel, and at least one communication link existing between the first device and the second device; and receive, from the first device, a data transmission via one of the first channel, the second channel, or a third channel.

In a fifth aspect of the present disclosure, an apparatus for communication is provided. The apparatus includes means for obtaining, by a first device from a second device via a first channel, an indication that the second device is to perform a channel measurement for a second channel that is different from the first channel, the first device and the second device being currently operating on a first channel, and at least one communication link existing between the first device and the second device; and means for performing, based on the indication, at least one of the following: performing a data transmission to the second device within a duration of the channel measurement via the second channel; or performing a data transmission to the second device after a predetermined time interval via the first channel, or performing a data transmission to the second device with a communication link, in a plurality of communication links between the first device and the second device, that is unused for performing the channel measurement.

In a sixth aspect of the present disclosure, an apparatus for communication is provided. The apparatus includes means for transmitting, by a second device to a first device via a first channel, an indication that the second device is to perform a channel measurement for a second channel that is different from the first channel, the first device and the second device being currently operating on a first channel, and at least one communication link existing between the first device and the second device; and receiving, from the first device, a data transmission via one of the first channel, the second channel, or a third channel.

In a seventh aspect of the present disclosure, there is provided a computer-readable storage medium having stored thereon a computer program. The computer program includes instructions that, when executed by a processor on a device, cause the device to perform the method according to the first aspect or the second aspect.

It should be understood that the content described in the summary section is not intended to limit the key or important features of the embodiments of the present disclosure, nor is it intended to limit the scope of the present disclosure. Other features of the present disclosure will become readily understood from the following description.

### BRIEF DESCRIPTION OF DRAWINGS

Example embodiments of the present disclosure are presented by way of example, and their advantages are explained in detail below with reference to the accompanying drawings, in which:
FIG. 1 illustrates an environment in which example embodiments of the present disclosure can be implemented;
FIG. 2A to FIG. 2D illustrate communication processes according to some example embodiments of the present disclosure;
FIG. 3A to FIG. 3H illustrate channel measurement announcement indications according to some example embodiments of the present disclosure;
FIG. 4 illustrates a flowchart of a communication method according to some example embodiments of the present disclosure;
FIG. 5 illustrates a flowchart of a communication method according to some example embodiments of the present disclosure;
FIG. 6 illustrates a simplified block diagram of a device suitable for implementing example embodiments of the present disclosure; and
FIG. 7 illustrates a block diagram of a computer readable medium according to some example embodiments of the present disclosure.

Throughout the drawings, the same or similar reference numerals represent the same or similar element.

### DETAILED DESCRIPTION

The principles and spirit of the present disclosure will be described below with reference to several exemplary embodiments shown in the accompanying drawings. It should be understood that these specific example embodiments are described merely to enable those skilled in the art to better understand and implement the present disclosure, and do not limit the scope of the present disclosure in any way.

As used herein, the term "comprising" and the like should be understood to be open-ended, i.e., "including but not limited to". The term "based on" should be understood as "based at least in part on". The terms "one embodiment" or "the embodiment" should be understood as "at least one embodiment". The terms "first," "second," and the like may refer to different or identical objects. Other explicit and implicit definitions may also be included below.

As used herein, the term "determining" encompasses a wide variety of actions. For example, "determining" may include computing, calculating, processing, deriving, investigating, looking up (e.g., looking up in a table, database, or another data structure), ascertaining, etc. Further, "determining" may include receiving (e.g., receiving information), accessing (e.g., accessing data in memory), and/or the like. Further, "determining" may include parsing, selecting, selecting, establishing, etc.

Herein, unless explicitly stated, "responding to A" performs one step and does not imply that this step is performed immediately after "A", but may include one or more intermediate steps.

The term "circuit device" as used herein refers to one or more of: (a) hardware only circuit implementations, such as implementations of analog and/or digital circuitry only; and (b) a combination of hardware circuitry and software, such as (if applicable): (i) a combination of analog and/or digital hardware circuitry and software/firmware, and (ii) any portion of a hardware processor with software (including digital signal processors, software, and memory that work together to cause devices such as optical communication devices or other computing devices to perform various functions); and (c) hardware circuitry and/or a processor, such as a microprocessor or a portion of a microprocessor, that requires software (e.g., firmware) for operation, but may not have software when software is not required for operation.

The definition of the circuit arrangement applies to all use scenarios of this term in the present application, including any claims. As another example, the term "circuit device" as used herein also covers only a hardware circuit or processor (or multiple processors), or a portion of a hardware circuit or processor, or an implementation of its accompanying software or firmware. For example, if applicable to a particular claim element, the term "circuitry" also covers similar integrated circuits in a baseband integrated circuit or processor integrated circuit or OLT or another computing device.

As used herein, the term "communication network" refers to a network that follows any suitable communication standard, such as New Radio (NR), Long Term Evolution (LTE), LTE-Advanced (LTE-A), Wideband Code Division Multiple Access (WCDMA), High Speed Packet Access (HSPA), Narrowband Internet of Things (NB-IoT), and the like. Further, communication between the terminal device and the network devices in the communication network may be performed according to any suitable generation of communication protocols including, but not limited to, first generation (1G), second generation (2G), 2.5G, 2.75G, third generation (3G), fourth generation (4G), 4.5G, fifth generation (5G), sixth generation (6G) communication protocol, and/or any other protocol currently known or to be developed in the future. Example embodiments of the present disclosure may be applied to various communication systems, including, but not limited to, terrestrial communication systems, non-terrestrial communication systems, or combinations thereof. Considering the rapid development in the communication field, it is of course also possible that future types of communication technologies and systems can be used to implement the present disclosure. It is not to be construed as limiting the scope of the present disclosure to just the foregoing systems.

As used herein, the term "network device" refers to a node in a communication network via which a terminal device accesses a network and receives service therefrom. Depending on the terminology and technology applied, a network device may refer to a base station (BS) or an access point (AP), such as a NodeB (NodeB or NB), an evolved NodeB (eNodeB or eNB), an NR NB (also referred to as a gNB), a remote radio unit (RRU), a radio head (RH), a remote radio head (RRH), a relay, an integrated access and backhaul (IAB) node, a low-power node such as a femto, pico, or the like.

As used herein, the term "terminal device" refers to any terminal device capable of wireless communication. By way of example and not limitation, a terminal device may also be referred to as a network device, a user equipment (UE), a subscriber station (SS), a portable subscriber station, a mobile station (MS), or an access terminal (AT). A terminal device may include, but is not limited to, a mobile phone, a cellular phone, a smart phone, a voice-over-IP (VoIP) phone, a wireless local loop phone, a tablet computer, a wearable terminal device, a personal digital assistant (PDA), a portable computer, a desktop computer, an image capture terminal device such as, for example, a digital camera, a gaming terminal device, a music storage and playback device, a vehicle mounted wireless terminal device, a wireless endpoint, a mobile station, a laptop embedded device (LEE), a laptop mounted device (LME), a universal serial bus (USB) dongle, a smart device, a wireless user premises equipment (CPE), an Internet of Things (IoT) device, a watch or other wearable device, a head-mounted display (HMD), a vehicle, a drone, a medical device and an application (e.g., a remote procedure), an industrial device and an application (e.g., a robot and/or other wireless device operating in an industrial and/or automated processing chain environment), a consumer electronic device, a device running on a commercial and/or industrial wireless network, etc. The terminal device may correspond to a mobile terminal (MT) portion (e.g., a relay node) of the IAB node. In the following description, the terms "terminal device", "network device", "terminal", "user equipment", and "UE" may be used interchangeably.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

The definition of the circuit applies to all usage scenarios of this term in this application, including any claims. As another example, the term "circuitry" as used herein also covers only a hardware circuit or processor (or multiple processors), or a portion of a hardware circuit or processor, or an implementation of its accompanying software or firmware. For example, if applicable to a particular claim element, the term "circuit" also covers similar integrated circuits in a baseband integrated circuit or processor integrated circuit or OLT or other computing devices.

As mentioned above, the wireless channel serves as a foundation for system design, network optimization, and performance evaluation. The channel measurement is a direct means for researching the wireless channel in the new frequency bands and the new scenes. Through channel measurement, massive channel measurement data may be obtained. By processing the measurement data through the high-precision multipath parameter estimation algorithm, channel parameters may be extracted, and the channel characteristics may be deeply studied and analyzed.

When the network device and the terminal device communicate through one channel, the network device may perform channel measurement during operating, and dynamically select an optimal channel based on the measurement result.

Due to hardware limitation, during the channel measurement, the network device may jump to other channels for scanning, and the dwell time is approximately between 50 milliseconds and 150 milliseconds. However, the terminal device does not know that the network device has changed the channel, and will keep transmitting data packet to the network device. After the maximum number of retries is reached, the terminal device will stop transmitting the data packet. This will cause packet loss and affect normal performance of the communication.

In view of this, embodiments of the present disclosure provide a solution for communication. In a solution, the first device obtains, from the second device via the first channel, an indication that the second device is to perform channel measurement for a second channel that is different from the first channel, the first device and the second device are currently operating on a first channel, and at least one communication link exists between the first device and the second device. Based on the indication, at least one of the following is performed: a data transmission to the second device is performed within a duration of the channel measurement via the second channel; or a data transmission to the second device is performed after a predetermined time interval via the first channel, or a data transmission to the second device is performed with a communication link, in a plurality of communication links between the first device and the second device, that is unused for performing the channel measurement.

In this way, it may be ensured that in the case of channel measurement, communication may still be performed through a current channel or another channel, thereby ensuring transmission reliability and predetermined transmission efficiency.

The principles and example embodiments of the present disclosure will be described in detail below with reference to the accompanying drawings.

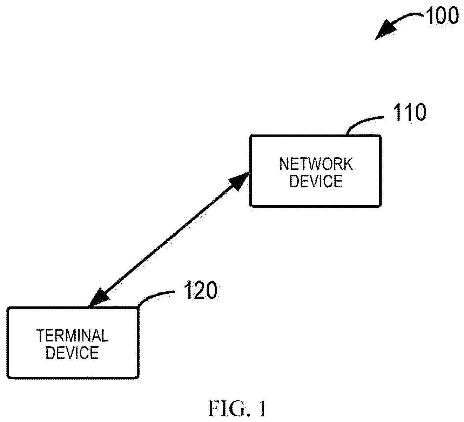

FIG. 1 illustrates an example communication network 100 in which example embodiments of the present disclosure may be implemented. The communication network 100 may be part of a communication network. In the communications network 100, a network device 110 and a terminal device 120 are included. The terminal device 120 may communicate with the network device 110.

In some example embodiments, the network device 110 may include, for example, a wireless router configured to provide wireless network coverage to an indoor environment where the user is located. The wireless router may be a network device compliant with the 802.11 series standards or implemented by any suitable device, such as a Wi-Fi access point (AP). For example, the network device 110 may communicate with other network devices (for example, a base station) to provide wireless network coverage for terminal devices in a specific range. The scope of the present disclosure is not limited in this aspect.

In some example embodiments, the terminal device 120 may be any access station (STA) or access terminal capable of accessing the wireless network coverage provided by the network device 110.

In some example embodiments, a link from the network device 110 to the terminal device 120 may be referred to as a downlink (DL), and a link from the terminal device 120 to the network device 110 may be referred to as an uplink (UL). In DL, the network device 110 is a transmitting (TX) device (or transmitter) and the terminal device 120 is a receiving (RX) device (or receiver). In UL, the terminal device 120 is a TX device (or transmitter) and the network device 110 is a RX device (or receiver).

It should be understood that the number of devices and their connections shown in FIG. 1 is merely illustrative without suggesting any limitation. The communication network 100 may include any suitable number of devices configured to implement example embodiments of the present disclosure. Although not shown, it should be understood that one or more additional devices may be deployed in the communication network 100.

Communication in the communication network 100 may be implemented according to any suitable communication protocol (s). Examples of communication protocols include, but are not limited to, cellular communication protocols such as 1G, 2G, 2.5G, 2.75G, 3G, 4G, 4.5G, 5G, 6G, wireless local network communication protocols such as Institute for Electrical and Electronics Engineers (IEEE) 802.11 and the like, and/or any other protocols currently known or to be developed in the future..

Further, the communication may utilize any proper wireless communication technology including, but not limited to: code division multiple access (CDMA), frequency division multiple access (FDMA), time division multiple access (TDMA), frequency division duplex (FDD), time division duplex (TDD), multiple-input multiple-output (MIMO), orthogonal frequency division multiplexing (OFDM), discrete Fourier transform spread OFDM (DFT-s-OFDM), and/or any other technology currently known or to be developed in the future.

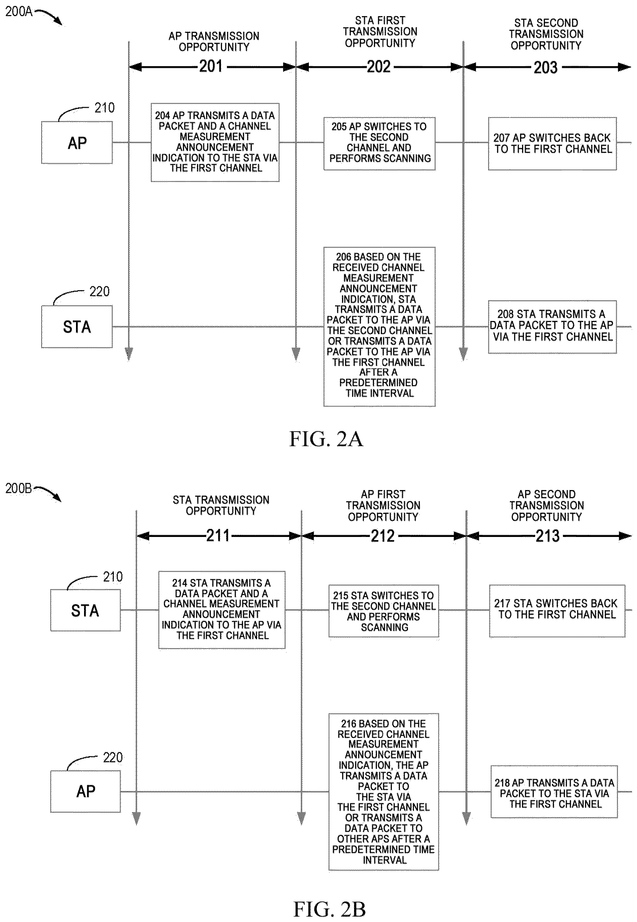

FIG. 2A to FIG. 2D illustrate a plurality of communication processes according to some example embodiments of the present disclosure. The communication processes shown in FIG. 2A to FIG. 2D may involve, for example, a network device 110 (e.g., an AP) and a terminal device 120 (e.g., a STA).

It should be understood that, in the communication process, at least part of the actions performed at the network device 110 may also be performed at the terminal device 120. At least part of the actions performed at the terminal device 120 may also be performed at the network device 110. In FIGS. 2A to 2D, the first device may be the AP 210, and the second device may be the STA 220, or the first device may be the STA 220, and the second device may be the AP 210.

In the communication process 200A shown in FIG. 2A, the AP 210 and the STA 220 are both currently operating on the same channel, such as a first channel, and at least one communication link exists between the first device and the second device. Within the transmission opportunity 201 of the AP 210, the AP 210 may transmit (204) a data packet and a channel measurement announcement indication to the STA 220 via the first channel, to indicate that the AP 210 is to perform channel measurement on other channels. For example, other channels to be measured may include a second channel that is different from the first channel. In some embodiments, the channel measurement announcement indication may include a type of the channel measurement, a mode of the channel measurement, a start time of the channel measurement, the duration of the channel measurement, an information parameter of the channel measurement, an operation category of the measurement channel, a channel identity (ID) of a measurement channel, a bandwidth indication, and/or the like. It should be understood that the content indicated by the channel measurement announcement indication is not limited in the present disclosure.

Within the first transmission opportunity 202 of the STA 220 after the transmission opportunity 201 of the AP 210, the AP 210 may switch (205) to the second channel and perform scanning to measure parameters of the second channel. Meanwhile, based on the received channel measurement announcement indication, the STA 220 may transmit (206) data to the AP 210 via the second channel, as the AP 210 is currently performing channel measurement for the second channel. Optionally, the STA 220 may also transmit the data packet to the AP 210 via the first channel after a predetermined time interval. That is, the AP 210 may complete channel measurement for the second channel and resume an operation on the first channel within the predetermined time interval. In some embodiments, the value of the predetermined time interval may be included in the channel measurement announcement indication to inform the STA 220 of the start time and the duration of the channel measurement, such that the STA 220 may continue to transmit the data packet to the AP 210 after the channel measurement ends, thereby ensuring the continuous and stable communication.

Within the second transmission opportunity 203 of the STA 220, the AP 210 may switch (207) back to the first channel to continue receiving data via the first channel. As such, the STA 220 may transmit (208) the data packet to the AP 210 via the first channel. In this way, data transmission and reception between the AP 210 and the STA 220 may be maintained, thereby avoiding the phenomena such as packet loss and high delay.

Instead, the STA 220 may also perform channel measurement. In the communication process 200B as shown in FIG. 2B, within the transmission opportunity 211 of the STA 220, the STA 220 may transmit (214) a data packet and a channel measurement announcement indication to the AP 210 via the first channel, to indicate that the STA 220 is about to perform channel measurement on other channels.

Within the first transmission opportunity 212 of the AP 210, the STA 220 may switch (215) to the second channel and perform scanning to measure parameters of the second channel. Meanwhile, based on the received channel measurement announcement indication, the AP 210 may transmit a data packet to the STA 220 via the first channel after a predetermined time interval. That is, the STA 220 may complete channel measurement for the second channel and resume the operation on the first channel within the predetermined time interval.

In some further embodiments, during the period when the STA 220 switches to the second channel and performs scanning, the STA 220 may also select to transmit data packets to other APs.

At the second transmission opportunity 213 of the AP 210, the STA 220 may switch (217) back to the first channel to continue receiving data through the first channel. Thus, the AP 210 may transmit (218) the data packet to the STA 220 via the first channel.

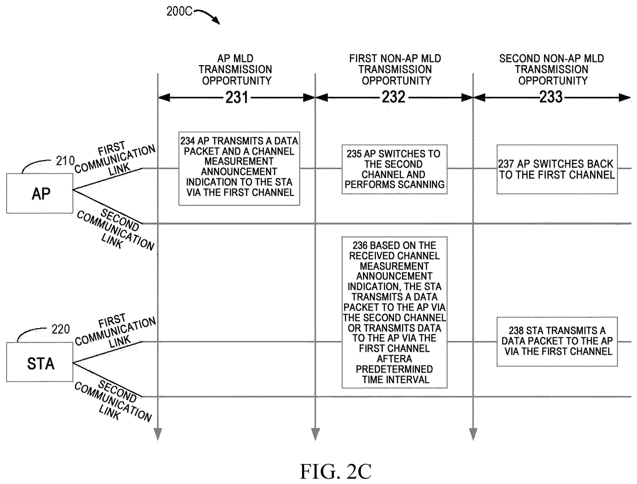

In some embodiments, the AP 210 and the STA 220 may be devices that support multi-link operation (MLO). Such device may also be referred to as a multi-link device (MLD). That is, the AP 210 and the STA 220 may perform data transmission by using a plurality of communication links. For example, in the communication process 200C shown in FIG. 2C, the AP 210 and the STA 220 may perform data transmission through the first communication link and the second communication link. It should be understood that there may be more communication links between the AP 210 and the STA 220. The scope of the present disclosure is not limited in this respect.

Within the MLD transmission opportunity 231 of the AP 210, the AP 210 may transmit (234) the data packet and the channel measurement announcement indication to the STA 220 via the first channel by using the first communication link, to inform that the AP 210 is about to perform channel measurement on other channels (e.g., the second channel) by using the first communication link.

Within the first non-AP MLD transmission opportunity 232, the AP 210 is about to perform channel measurement on other channels (e.g., the second channel) by using the first communication link. In this case, in some embodiments, based on the received channel measurement announcement indication, the STA 220 may transmit the data packet to the AP 210 via the first channel by using the first communication link after a predetermined time interval. The AP 210 may complete channel measurement for the second channel and resume the operation on the first channel within the predetermined time interval. In this case, the STA 220 may always transmit the data packet to the AP 210 by using the first communication link.

At the second non-AP MLD transmission opportunity 233, the AP 210 may switch (237) back to the first channel and continue to receive data via the first channel by using the first communication link. As such, the STA 220 may transmit (238) the data packet to the AP 210 via the first channel by using the first communication link.

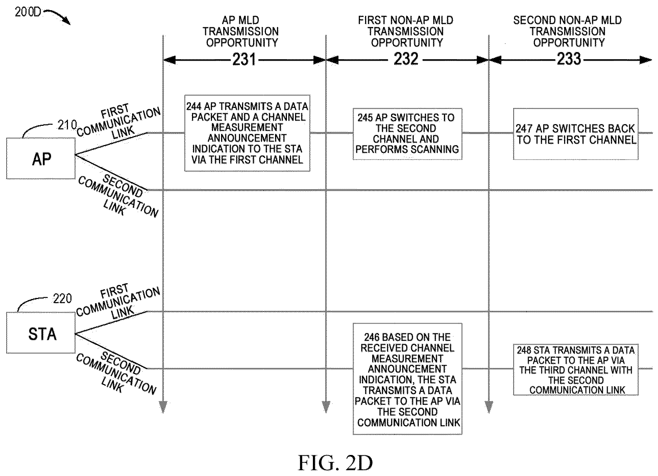

In some embodiments, data transmission between the AP 210 and the STA 220 may be performed with a communication link, in the plurality of communication links, that is unused for channel measurement. In the communication process 200D shown in FIG. 2D, when the AP 210 performs measurements on other channels by using the first communication link, the AP 210 and the STA 220 may select the second communication link for data transmission. Specifically, as shown in FIG. 2D, in the MLD transmission opportunity 231 of the AP 210, the AP 210 may transmit (244) a data packet and a channel measurement announcement indication to the STA 220 via the first channel, to inform that the STA 220 is about to perform channel measurement on other channels by using the first communication link.

After entering the first non-AP MLD transmission opportunity 232, the AP 210 may switch (245) to the second channel and perform scanning to measure parameters of the second channel. Meanwhile, based on the received channel measurement announcement indication, the STA 220 may select to transmit (236) the data packet to the AP 210 via the second communication link.

In this case, the STA 220 may perform corresponding measurement to determine which channel to use for data transmission via the second communication link between the AP 210 and the STA 220. For example, the STA 220 may determine to transmit data to the AP 210 via the third channel by using the second communication link to. The third channel may be different from the first channel and the second channel, and the third channel may not be in the measurement state. It should be understood that the determination of the third channel may result in a latency, and the data transmission toward the AP 210 may thus be delayed.

Thus, after entering the second non-AP MLD transmission opportunity 233, the AP 210 may switch (247) back to the first channel. The STA 220 may transmit (248) the data packet to the AP 210 via the third channel by using the second communication link. In this way, smooth communication may be maintained by selecting a plurality of communication links.

The indication described above may be obtained through multiple types of frames and frame structures, and the content and structure of the indication may be described below with reference to various embodiments.

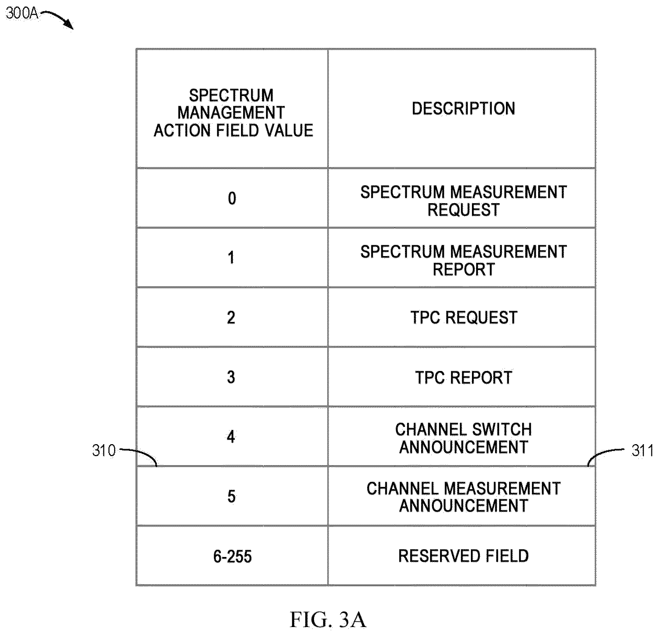

FIG. 3A to FIG. 3G illustrate channel measurement announcement indications according to some example embodiments of the present disclosure. As shown in FIG. 3A, the channel measurement announcement indication may be obtained based on the spectrum management action field 300A according to the 802.11 protocol. The spectrum management action field 300A may include a plurality of spectrum management action field values, and each field value may correspond to at least one action on the spectrum management.

In some embodiments, a specific value may be added in the spectrum management action field 300A. As shown in FIG. 3A, for example, a spectrum management action field value with a value of "5" may be added to indicate the channel measurement announcement 311, and the channel measurement announcement indication may be obtained based on this specific value.

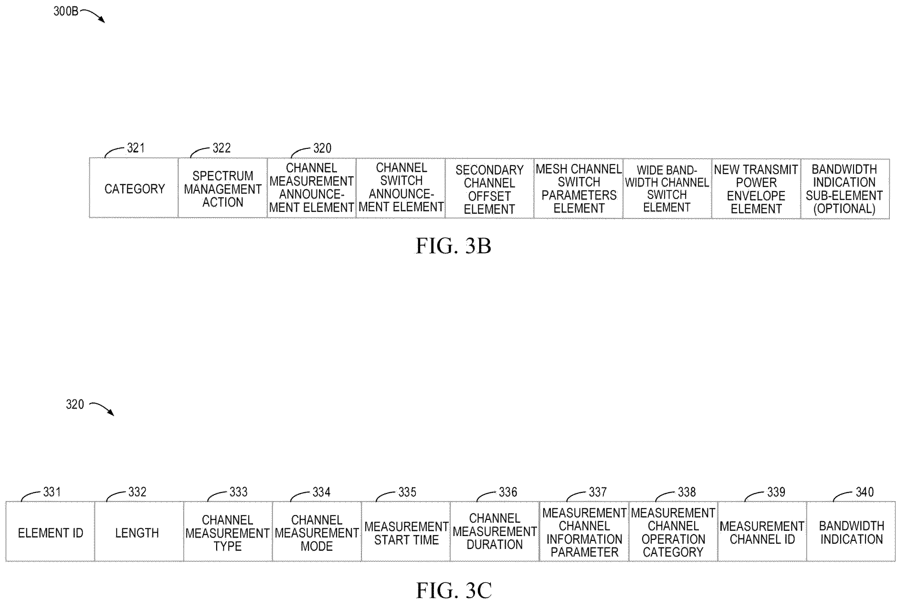

When a device such as the AP 210, the STA220, the MLD, or the non-AP performs channel measurement, a channel measurement announcement frame may be used to indicate that channel measurement is to be performed. FIG. 3B illustrates an example channel measurement announcement frame 300B according to embodiments of the present disclosure. As shown in FIG. 3B, the channel measurement announcement frame 300B may include a plurality of elements. Each element may be a field occupying different numbers of bits. For example, the field 321 indicating the category may have 1 bit, the field 320 indicating the channel measurement announcement may have 13 bits, and so on. In some embodiments, the measurement channel bandwidth and channel ID information may appear in the field 320 indicating the channel measurement announcement, or in other channel elements related to the bandwidth and the channel number.

For example, as shown in FIG. 3C, the frame 320 for indicating the channel measurement announcement element may include an element ID field 331, a length field 332, a channel measurement type field 333, a channel measurement mode field 334, a measurement start time field 335, a channel measurement duration field 336, a measurement channel information parameter field 337, a measurement channel operation category field 338, a measurement channel ID field 339, and a bandwidth indication field 340. It should be understood that the frame configured to indicate the channel measurement announcement element may include more or less content, which will depend on actual work needs, and the present disclosure does not limit it in this regard.

In the frame 320 for indicating the channel measurement announcement element, the channel measurement type field 333 may be configured to a value indicating the measurement purpose. The measurement type may be allocated or defined in the 802.11 protocol. The channel measurement mode field 334 may indicate any restriction on the transmission on a new channel. The AP or STA may set the channel switch mode field to 0 or 1 on transmission. The measurement start time field 335 may be set to a timing synchronization function (TSF) at the time (± 32 µs) at which the channel measurement announcement starts. 0 may indicate that it starts immediately. The channel measurement duration field 336 may be set to the duration of the measurement, expressed in time units (TUs). The bandwidth indication field 340 may share the same definition as the extremely high throughput (EHT) operation information field in the EHT operation element.

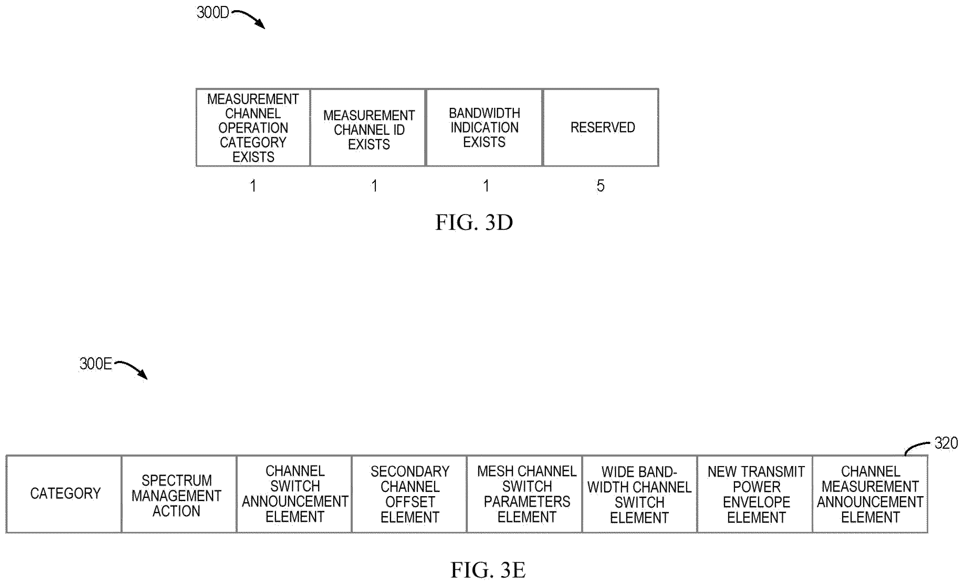

The measurement channel information parameter field 337 may include fields shown in the example measurement channel information parameter field 337 shown in FIG. 3D, i.e., a 1-bit field indicating the existence of the measurement channel operation category, a 1-bit field indicating the existence of the measurement channel ID, a 1-bit field indicating the existence of the bandwidth indication, and a 5-bit reserved field.

In some embodiments, as shown in FIG. 3E, the frame 320 for indicating the channel measurement announcement element may be added to a channel switch announcement frame 300E (based on the 9.6.2.6 protocol). A device, such as the AP 210 or the MLD, may inform the peer device about the impending channel measurement by transmitting the channel switch announcement frame 300E that includes the channel measurement announcement element.

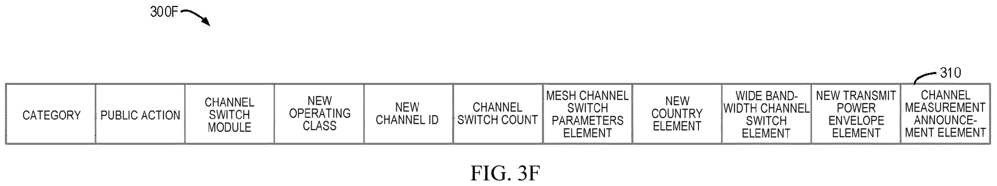

In other embodiments, as shown in FIG. 3F, the frame 320 for indicating the channel measurement announcement element may be added to an extended channel switch announcement frame 300F (based on the 9.6.7.7 protocol). A device, such as the STA 220 or the non-AP MLD, may inform the peer device about the impending channel measurement by transmitting the extended channel switch announcement frame 300F that includes the channel measurement announcement element.

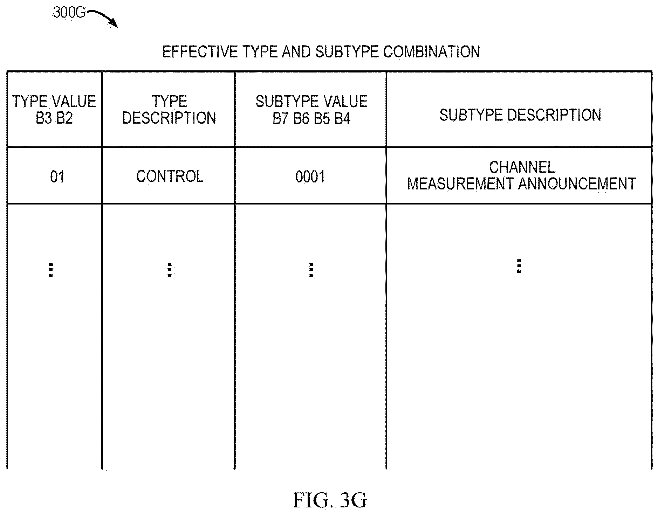

In some embodiments, a new channel switch announcement control frame may be defined, or a channel measurement announcement element information field may be added to the control frame as a trigger or an extension of the control frame. As shown in FIG. 3G, in the combination 300G of the valid type and subtype, a new control subtype value "0001" may be defined in the frame control field to indicate the channel measurement announcement.

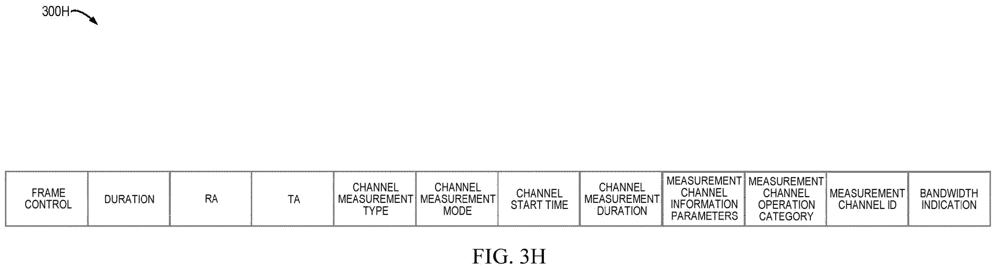

As shown in FIG. 3H, the information field in the newly defined channel measurement announcement control frame 300H may be the same as the content of the channel switch announcement management frame (e.g., the frame 300B in FIG. 3B).

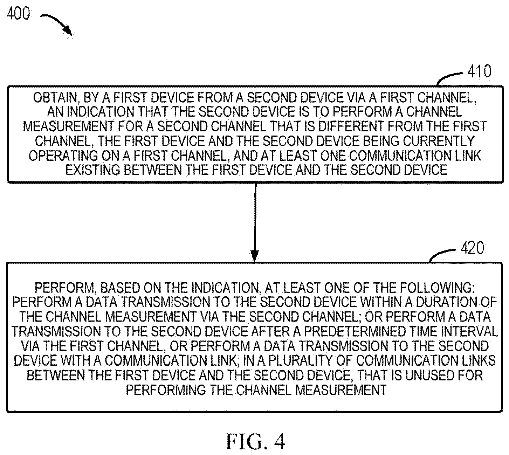

FIG. 4 illustrates a flowchart of a communication method according to some example embodiments of the present disclosure. The method 400 may be implemented, for example, at a first device, e.g., at a network device 110 and/or at a terminal device 120.

At block 410, the first device obtains, from a second device via a first channel, an indication that the second device is to perform a channel measurement for a second channel that is different from the first channel, the first device and the second device being currently operating on a first channel, and at least one communication link existing between the first device and the second device.

At block 420, the first device performs, based on the indication, at least one of the following: performing a data transmission to the second device within a duration of the channel measurement via the second channel; or performing a data transmission to the second device after a predetermined time interval via the first channel, or performing a data transmission to the second device with a communication link, in a plurality of communication links between the first device and the second device, that is unused for performing the channel measurement.

In some example embodiments, the second device completes the channel measurement and resumes an operation on the first channel within the predetermined time interval, and at least one communication link exists between the first device and the second device.

In some example embodiments, obtaining the indication includes obtaining the indication based on a specific value in a spectrum management action field according to a 802.11 protocol.

In some example embodiments, obtaining the indication includes obtaining the indication based on a specific frame associated with an announcement of the channel measurement.

In some example embodiments, obtaining the indication includes obtaining the indication based on a specific value in a channel switch action field or an extended channel switch action field according to a 802.11 protocol.

In some example embodiments, the indication includes at least one of: a type of the channel measurement, a mode of the channel measurement, a start time of the channel measurement, or a duration of the channel measurement.

In some example embodiments, performing the data transmission to the second device via the first channel with the communication link that is unused for the channel measurement includes: communicating with the second device via the first channel by using a first communication link in the plurality of communication links between the first device and the second device; and in accordance with receiving the indication that the second device is to perform the channel measurement on the second channel by using the first communication link, and a second communication link in the plurality of communication links is unused for the channel measurement, performing the data transmission to the second device via a third channel by using the second communication link.

In some example embodiments, the first device includes a terminal device and the second device includes a network device for Wi-Fi communication, or the first device includes a network device for Wi-Fi communication and the second device includes a terminal device.

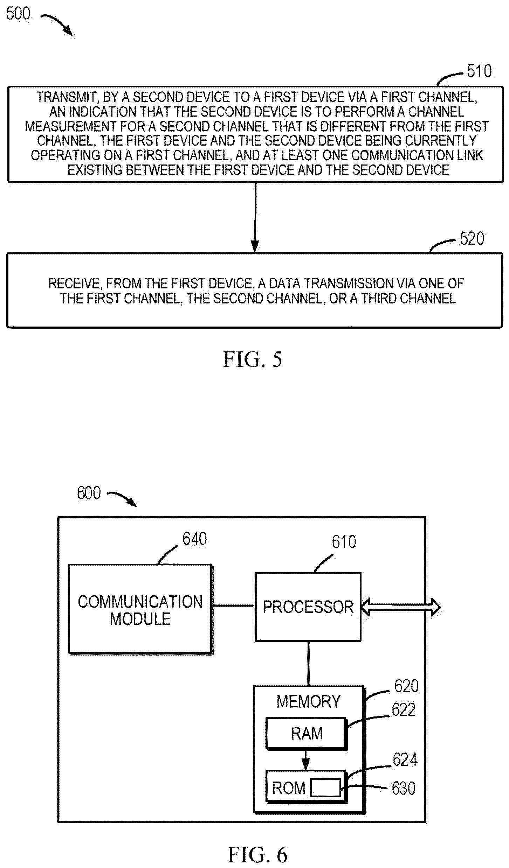

FIG. 5 illustrates a flowchart of a communication method according to some example embodiments of the present disclosure. The method 500 may, for example, be implemented at a second device, such as at the network device 110 and/or at the terminal device 120.

At block 510, the second device transmits, to the first device via the first channel, an indication that the second device is to perform a channel measurement for a second channel that is different from the first channel, the first device and the second device being currently operating on a first channel, and at least one communication link existing between the first device and the second device.

At block 520, the second device receives, from the first device, a data transmission via one of the first channel, the second channel, or the third channel.

In some example embodiments, transmitting the indication includes transmitting the indication based on a specific value in a spectrum management action field according to a 802.11 protocol.

In some example embodiments, transmitting the indication includes transmitting the indication based on a specific frame associated with an announcement of the channel measurement.

In some example embodiments, transmitting the indication includes transmitting the indication based on a specific value in a channel switch action field or an extended channel switch action field according to a 802.11 protocol.

In some example embodiments, the indication includes at least one of: a type of the channel measurement, a mode of the channel measurement, a start time of the channel measurement, or a duration of the channel measurement.

In some example embodiments, receiving the data transmission includes receiving, via the second channel, the data transmission within a duration of the channel measurement.

In some example embodiments, receiving the data transmission includes receiving, via the first channel, the data transmission after a predetermined time interval. The second device completes the channel measurement and resumes an operation on the first channel within the predetermined time interval, at least one communication link exists between the first device and the second device.

In some example embodiments, receiving the data transmission includes in response to performing the channel measurement for the second channel by using a first communication link in a plurality of communication links between the first device and the second device, receiving the data transmission via the third channel by using a second communication link, in the plurality of communication links, that is unused for the channel measurement.

In some example embodiments, the first device includes a terminal device and the second device includes a network device for Wi-Fi communication, or the first device includes a network device for Wi-Fi communication and the second device includes a terminal device.

In some example embodiments, an apparatus for communicating may include means for performing respective steps of the method 400. These means may be implemented in any suitable manner. For example, the means may be implemented as a circuit device or a software module.

The apparatus for communicating may include means for obtaining, by a first device from a second device via a first channel, an indication that the second device is to perform a channel measurement for a second channel that is different from the first channel, the first device and the second device being currently operating on a first channel, and at least one communication link existing between the first device and the second device; and means for performing, based on the indication, at least one of the following: performing a data transmission to the second device within a duration of the channel measurement via the second channel; or performing a data transmission to the second device after a predetermined time interval via the first channel, or performing a data transmission to the second device with a communication link, in a plurality of communication links between the first device and the second device, that is unused for performing the channel measurement.

In some example embodiments, the second device completes the channel measurement and resumes an operation on the first channel within the predetermined time interval, and at least one communication link exists between the first device and the second device.

In some example embodiments, the apparatus for communicating further includes means for obtaining the indication based on a specific value in a spectrum management action field according to a 802.11 protocol.

In some example embodiments, the apparatus for communicating further includes means for obtaining the indication based on a specific frame associated with an announcement of the channel measurement.

In some example embodiments, the apparatus for communicating further includes means for obtaining the indication based on a specific value in a channel switch action field or an extended channel switch action field according to a 802.11 protocol.

In some example embodiments, the indication includes at least one of: a type of the channel measurement, a mode of the channel measurement, a start time of the channel measurement, or a duration of the channel measurement.

In some example embodiments, the apparatus for communicating further includes means for communicating with the second device via the first channel by using a first communication link in the plurality of communication links between the first device and the second device; and means for in accordance with receiving the indication that the second device is to perform the channel measurement on the second channel by using the first communication link, and a second communication link in the plurality of communication links is unused for the channel measurement, performing the data transmission to the second device via a third channel by using the second communication link.

In some example embodiments, the first device includes a terminal device and the second device includes a network device for Wi-Fi communication, or the first device includes a network device for Wi-Fi communication and the second device includes a terminal device.

In some example embodiments, an apparatus for communicating may include means for performing respective steps of the method 500. These means may be implemented in any suitable manner. For example, the means may be implemented as a circuit device or a software module.

The apparatus for communicating may include means for transmitting, by a second device to a first device via a first channel, an indication that the second device is to perform a channel measurement for a second channel that is different from the first channel, the first device and the second device being currently operating on a first channel, and at least one communication link existing between the first device and the second device, and means for receiving, from the first device, a data transmission via one of the first channel, the second channel, or a third channel.

In some example embodiments, the apparatus for communicating further includes means for transmitting the indication based on a specific value in a spectrum management action field according to a 802.11 protocol.

In some example embodiments, the apparatus for communicating further includes means for transmitting the indication based on a specific frame associated with an announcement of the channel measurement.

In some example embodiments, the apparatus for communicating further includes means for transmitting the indication based on a specific value in a channel switch action field or an extended channel switch action field according to a 802.11 protocol.

In some example embodiments, the indication includes at least one of: a type of the channel measurement, a mode of the channel measurement, a start time of the channel measurement, or a duration of the channel measurement.

In some example embodiments, the apparatus for communicating further includes means for receiving, via the second channle, the data transmission within a duration of the channel measurement.

In some example embodiments, the apparatus for communicating further includes means for receiving, via the first channel, the data transmission after a predetermined time interval. The second device completes the channel measurement and resumes an operation on the first channel within the predetermined time interval, and at least one communication link exists between the first device and the second device.

In some example embodiments, the apparatus for communicating further includes means for in response to performing the channel measurement for the second channel by using a first communication link in a plurality of communication links between the first device and the second device, receveing the data transmission via the third channel by using a second communication link, in the plurality of communication links, that is unused for the channel measurement.

In some example embodiments, the first device includes a terminal device and the second device includes a network device for Wi-Fi communication, or the first device includes a network device for Wi-Fi communication and the second device includes a terminal device.

FIG. 6 is a simplified block diagram of a device 600 suitable for implementing example embodiments of the present disclosure. The device 600 may be configured to implement a network device 110 and/or a terminal device 120 in the communications network 100. As shown, the device 600 includes one or more processing units 610, one or more memories 620 coupled to the processing unit 610, and a communication module 640 coupled to the processing unit 610.

The communication module 640 is for bi-directional communication. In some example embodiments, the communication module 640 may have at least one antenna to facilitate communication. In some example embodiments, the communication module 640 may include one or more communication interfaces. The communication interface may represent any interface required to communicate with other network elements.

The processing unit 610 may be of any type suitable for a local technology network and may include, but is not limited to, one or more of a general purpose computer, a special purpose computer, a microcontroller, a digital signal controller (DSP), and a controller-based multi-core controller architecture. The device 600 may have multiple processors, such as an application specific integrated circuit chip, that temporally Slave a clock that is synchronized with the main processor.

The memory 620 may include one or more non-volatile memory and one or more volatile memories. Examples of non-volatile memory include, but are not limited to, read-only memory (ROM) 624, erasable programmable read-only memory (EPROM), flash memory, hard disk, compact disc (CD), digital video disc (DVD), and other magnetic storage and/or optical storage. Examples of volatile memory include, but are not limited to, random access memory (RAM) 622 and other volatile memory that does not persist in the power-off duration.

Computer program 630 includes computer-executable instructions executed by associated processing unit 610. The computer program 630 may be stored in ROM 624. Processing unit 610 may perform any suitable action and processing by loading computer program 630 into RAM 622.

Example embodiments of the present disclosure may be implemented by way of computer program 630, such that device 600 may perform any of the processes of the present disclosure as discussed with reference to FIGS. 2-5. Example embodiments of the present disclosure may also be implemented by hardware or by a combination of software and hardware.

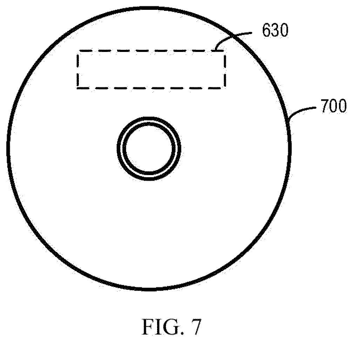

In some example embodiments, the computer program 630 may be tangibly embodied in a computer-readable medium, which may be included in the device 600, such as in the memory 620, or other storage device that may be accessed by the device 600. The computer program 630 may be loaded from a computer-readable medium to the RAM 622 for execution. The computer-readable medium may include any type of tangible non-volatile memory, such as ROM, EPROM, flash memory, hard disk, CD, DVD, or the like. FIG. 7 illustrates an example of a computer-readable medium 800 in the form of a CD or DVD according to some example embodiments of the present disclosure. The computer readable medium 800 has stored thereon a computer program 730.

In general, various embodiments of the present disclosure may be implemented in hardware or dedicated circuitry, software, logic, or any combination thereof. Some aspects may be implemented in hardware, while other aspects may be implemented in firmware or software, which may be executed by a controller, microprocessor, or other computing device. Although various aspects of example embodiments of the present disclosure are shown and described as block diagrams, flowcharts, or using some other diagrammatic representation, it should be understood that the blocks, apparatuses, systems, techniques, or methods described herein may be implemented as, for example, non-limiting examples, hardware, software, firmware, dedicated circuits or logic, general purpose hardware or controllers, or other computing devices, or some combination thereof.

The present disclosure also provides at least one computer program product tangibly stored on a computer-readable storage medium. In some example embodiments, the computer-readable storage medium may be non-transitory. The computer program product includes computer-executable instructions, such as instructions included in a program module, that execute in a device on a real or virtual processor of a target to perform the method 400 described above with reference to FIG. 4 or the method 500 described in FIG. 5. Generally, program modules include routines, programs, libraries, objects, classes, components, data structures, etc. that perform specific tasks or implement specific abstract data types. In various embodiments, the functionality of program modules may be combined or segmented between program modules as desired. Machine executable instructions for program modules may be executed within a local or distributed device. In distributed devices, program modules may be located in local and remote storage media.

The computer program code for implementing the methods of the present disclosure may be written in one or more programming languages. These computer program code may be provided to a processor of a general purpose computer, special purpose computer, or other programmable data processing apparatus, such that the program code, when executed by a computer or other programmable data processing apparatus, causes the functions/operations specified in the flowchart and/or block diagram to be implemented. The program code may be entirely on a computer, partly on a computer, as a stand-alone software package, partly on a computer and partly on a remote computer or entirely on a remote computer or server.

In the context of the present disclosure, computer program code or related data may be carried by any suitable carrier to enable a device, apparatus, or processor to perform the various processes and operations described above. Examples of carriers include signals, computer-readable media, and the like. Examples of signals may include electrical, optical, radio, sound, or other forms of propagating signals, such as carriers, infrared signals, and the like.

The computer-readable medium may be any tangible medium containing or storing a program for or with respect to an instruction execution system, apparatus, or device. The computer readable medium may be a computer readable signal medium or a computer readable storage medium. The computer-readable media may include, but are not limited to, electronic, magnetic, optical, electromagnetic, infrared, or semiconductor systems, devices, or devices, or any suitable combination thereof. A more detailed example of a computer-readable storage medium includes an electrical connection with one or more wires, a portable computer diskette, a hard disk, a RAM, a ROM, an EPROM or Flash memory, an optical storage device, a magnetic storage device, or any suitable combination thereof.

Moreover, although the operations of the methods of the present disclosure are described in a particular order in the figures, this is not a requirement or implying that the operations must be performed in that particular order, or that all of the illustrated operations must be performed to achieve the desired results. Rather, the steps depicted in the flowchart may change the order of execution. Additionally, or alternatively, certain steps may be omitted, combining multiple steps into one step, and/or decomposing one step into multiple steps. It should also be noted that the features and functions of two or more devices according to the present disclosure may be embodied in one device. Conversely, the features and functions of one of the devices described above may be further divided into being embodied by multiple devices.

While the present disclosure has been described with reference to several specific embodiments, it should be understood that the present disclosure is not limited to the specific embodiments disclosed. The present disclosure is intended to cover various modifications and equivalent arrangements included within the spirit and scope of the appended claims.

## Claims

1. A method for communication comprising:
obtaining **(410),** by a first device from a second device via a first channel, an indication that the second device is to perform a channel measurement for a second channel that is different from the first channel, the first device and the second device being currently operating on a first channel, and at least one communication link existing between the first device and the second device;
performing (420), based on the indication, at least one of the following:
performing a data transmission to the second device within a duration of the channel measurement via the second channel; or
performing a data transmission to the second device after a predetermined time interval via the first channel, or
performing a data transmission to the second device with a communication link, in a plurality of communication links between the first device and the second device, that is unused for performing the channel measurement.

2. The method of claim 1, wherein the second device completes the channel measurement and resumes an operation on the first channel within the predetermined time interval.

3. The method of claim 1 or 2, wherein obtaining (410) the indication comprises at least one of: a)
obtaining the indication based on a specific value in a spectrum management action field according to a 802.11 protocol, or
b)obtaining the indication based on a specific frame associated with an announcement of the channel measurement, or
c)
obtaining the indication based on a specific value in a channel switch action field or an extended channel switch action field according to a 802.11 protocol.

4. The method of claim 1 or 2, wherein the indication comprises at least one of:
a type of the channel measurement,
a mode of the channel measurement,
a start time of the channel measurement,
the duration of the channel measurement,
at least one parameter of information of the channel measurement,
an operation category of the measurement channel,
a channel identity associated with the channel measurement, or
a bandwidth indication.

5. The method of claim 1 or 2, wherein performing the data transmission to the second device via the first channel with the communication link that is unused for the channel measurement comprises:
communicating with the second device via the first channel by using a first communication link in the plurality of communication links between the first device and the second device;
in accordance with receiving the indication that the second device is to perform the channel measurement on the second channel by using the first communication link, and a second communication link in the plurality of communication links is unused for the channel measurement, performing the data transmission to the second device via a third channel by using the second communication link.

6. The method of claim 1, wherein the first device comprises a terminal device and the second device comprises a network device for Wi-Fi communication, or the first device comprises a network device for Wi-Fi communication and the second device comprises a terminal device.

7. A method for communication comprising:
transmitting (510), by a second device to a first device via a first channel, an indication that the second device is to perform a channel measurement for a second channel that is different from the first channel, the first device and the second device being currently operating on a first channel, and at least one communication link existing between the first device and the second device; and
receiving (520), from the first device, a data transmission via one of the first channel, the second channel, or a third channel.

8. The method of claim 7, wherein transmitting (510) the indication comprises at least one of:
a) transmitting the indication based on a specific value in a spectrum management action field according to a 802.11 protocol, or
b)transmitting the indication based on a specific frame associated with an announcement of the channel measurement,
or c)
transmitting the indication based on a specific value in a channel switch action field or an extended channel switch action field according to a 802.11 protocol.

9. The method of any of claims 7 to 8, wherein the indication comprises at least one of:
a type of the channel measurement,
a mode of the channel measurement,
a start time of the channel measurement,
a duration of the channel measurement,
at least one parameter of information of the channel measurement,
an operation category of the measurement channel,
a channel identifier associated with the channel measurement, or
a bandwidth indication.

10. The method of any of claims 7 to 8, wherein receiving (520) the data transmission comprises:
receiving, via the second channle,the data transmission within a duration of the channel measurement.

11. The method of any of claims 7 to 8, wherein receiving (520) the data transmission comprises at least one of: a)
receiving, via the first channel, the data transmission after a predetermined time interval, the second device completing the channel measurement and resuming an operation on the first channel within the predetermined time interval, or
b)in response to performing the channel measurement for the second channel by using a first communication link in a plurality of communication links between the first device and the second device, receveing the data transmission via the third channel by using a second communication link, in the plurality of communication links, that is unused for the channel measurement.

12. The method of any of claims 7 to 8, wherein the first device comprises a terminal device and the second device comprises a network device for Wi-Fi communication, or the first device comprises a network device for Wi-Fi communication and the second device comprises a terminal device.

13. A device (600) for communication comprising:
at least one processor (610); and
at least one memory (620) coupled to the at least one processor (610), the at least one memory (620) comprising instructions (630) stored therein, the at least one memory (620) and the instructions (630) being further configured to, with the at least one processor (610), cause the device (600) to perform the method of any of claims 1 to 6 or the method of any of claims 7 to 12.

14. An apparatus for communication, comprising means for performing the method of any of claims 1 to 6 or means for performing the method of any of claims 7 to 12.

15. A computer-readable storage medium (700) having stored thereon a computer program (630), the computer program (630) comprising instructions that, when executed by a processor (610) on a device (600), cause the device (600) to perform the method of any of claims 1 to 6 or the method of any of claims 7 to 12.
